# EUROPEAN PATENT APPLICATION

(11) **EP 4 686 545 A1**
(43) Date of publication of application: **04.02.2026**
(21) Application number: 25179029.1
(22) Date of filing: 27.05.2025
(51) Int. Cl.: B29C 48/265

(54) **THE MODULAR EXTRUSION LINE**

(30) Priority: 29.07.2024 SK 500452024
(71) Applicant: Fischer TireTech Slovakia, s. r. o., 911 01 Trencin (SK)
(72) Inventor: Keno, Adrián, 913 38 Soblahov (SK)
(74) Representative: inventa Patentova a znamkova kancelaria s.r.o.

(57) **Abstract**

The modular extrusion line intended for production of semi-finished products of tyres from high elastic compounds comprises a plurality of modules, wherein each module is formed by frame (1) dimensionally corresponding to the internal dimensions of the international shipping containers, wherein frame (1) is also the transport support. At least one technological component (2) is installed in the frame (1) of at least one module. At least one technological component (2) in the frame (1) of the at least one module has adjusting elements (3) for adjustment in at least one axis. The modular extrusion line comprises the modules of the base structure of the line, the frames (1) of which are precisely set with each other by means of setting elements (4) to form the base structure of the line, and comprises at least one module of the superstructure structure of the line. The frames (1) of the module of the base structure of the line are anchored to the floor by means of anchoring elements (5) in the horizontal plane. The frame (1) of each module of the superstructure of the line structure is interconnected with the frame (1) of at least one module of the base structure of the line by means of interconnecting elements (6) for their precise interconnection.

## Description

### Technical field

The invention relates to the construction of the modular extrusion line intended for the production of semi-finished products of tyres from highly elastic compounds. The invention falls into the field of machinery in the rubber industry.

### Background

The extrusion lines (devices) for the production of semi-finished products (treads, sidewalls, fillings) of tyres are dimensionally large devices, usually consisting of two floors with the length of 60 to 100 m. For dimensional reasons, it is difficult to complete these devices at the plant of manufacturer. In other words, it would be both time-consuming and costly to complete the device at the plant of manufacturer, and it would be equally difficult to dismantle the device for overseas shipment in shipping containers.

Therefore, these devices are assembled only in small subassemblies, then packed into wooden boxes and the final assembly, activation (software) and testing of the device with the material is carried out only in the customer's plant at the final destination. Currently, the devices are shipped in disassembled state in a large number of about twenty and forty-foot containers without testing, while assembly, activation and testing are done only at the customer's site, which entails a lot of work and risks, so this stage takes in the order of 5 to 6 months, depending on the complexity of device. Packing and transporting of devices in smaller units is costly as the devices are dismantled and spread on the floor and the full volume of the shipping containers is not used. The total time between the ordering of devices and commissioning is then approximately 20 months.

In the state of the art, EP 2525959 B1 discloses the known modular line for production of plastic tubes without superstructure. Its modules are actually modified containers to be well handled, as this allows the line to be disassembled and transported to another location afterwards. In this solution, the modified container is both the technological module of the line and also the transport container. Significant limitation is the fact that the dimensions of the module must be identical to the dimensions of the standard container, while the walls of the container, or parts of them, may restrict the layout of the modular line. Furthermore, the modular line, so arranged, does not solve one of the key problems, which is its considerable space requirement, since standard extrusion lines are very long devices.

To overcome the shortcomings of the solutions known in the prior art in order to achieve savings in time and cost for packaging, transport, installation and start-up of the extrusion line and to minimize the area required for its installation, the modular extrusion line according to the present invention has been developed.

### Summary of the invention

For the purpose of saving time and costs for packaging, transportation, installation and start-up of the device, the modular extrusion line has been developed for production of semi-finished products of tyres from highly elastic compounds according to the present invention, the essence of which is that it comprises a plurality of interconnecting modules, where each module is formed by frame dimensionally corresponding to the internal dimensions of internationally transportable containers, where each frame, in addition to being an assembly and technological support, is also a transport support.

This arrangement avoids the need to modify standard shipping containers used by lines known in the state of the art, since these containers are not part of the modular line, and also avoids possible space constraints in the assembly of the line caused, for example, by walls of the modified containers or parts thereof. Another related advantage of the arrangement according to the present invention is the possibility to place several modules in one standard shipping container, in case the module has, for example, half the width, and thus to place, for example, two energy modules side by side in one container during transport, which brings logistical and handling savings during transport and also reduces the associated costs.

For the purposes of the present invention, the term "frame" is to be understood to mean a frame structure which, once formed, is not disassembled throughout its use in the technological process for which it is intended, nor is it disassembled during logistical operations. The frame structure may advantageously be made, for example, by welding or by assembly using fasteners. At least one technological component is installed in the frame of at least one module. For the purposes of the present invention, the term "installed" is to be understood as: positioned and attached to, and possibly interconnected with, another technological component. At least one technology component installed in the frame of at least one module comprises adjusting elements for adjustment in at least one axis and in the angular direction. In particular, the technological components of the modular extrusion line installed in the frames are: a precipitation conveyor, a first weight conveyor, an ascending conveyor, a cooling system, a descending conveyor, a blowing conveyor, a inspection conveyor, a second weight conveyor, a cross-cutting conveyor, a conveyor above a winders, a winders, a scrap conveyor, a drive units, an energy modules, and eventually also other additional technological components.

The modular extrusion line preferably comprises the modules of the base structure of the line, the frames of which are preferably precisely set with each other by means of setting elements to form the base structure of the line. The frames of the module of the base structure of the line are advantageously anchored to the floor in the precise horizontal plane by means of the anchoring elements.

According to the present invention, it is advantageous if the setting elements of the frames of mutually adjacent modules of the base structure of the line are anchored by means of the common anchoring element. In such case, it is possible to ensure extremely precise fitting-in of the mutual position of mutually adjacent frames in all three axes, thanks to which it is possible to minimize the time required to start-up of the line after the anchoring of its individual modules, which already comprise fully completed and mutually tuned technological components of the line. Such reduction of the line start-up time can only be achieved due to the fact that the setting and anchoring elements according to this advantageous embodiment of the present invention ensure the precise mutual fitting-in and anchoring of its modules and thus prevent their mutual movement in all three axes at the same time.

Preferably, the modular extrusion line also comprises at least one line superstructure module, wherein the frame of each line superstructure module is preferably interconnected to the frame of at least one line base structure module by interconnecting elements for precise interconnection thereof. Also preferably, at least one module of the superstructure of the line structure comprises at least one technological component, which preferably is the cooling system.

The connection of at least one frame of the line superstructure module to at least one frame of the line superstructure module is preferably implemented by ascending conveyor or descending conveyor.

The modular extrusion line according to the present invention is advantageously arranged with a plurality of layers of the cooling system disposed in the superstructure of the line. Such an arrangement allows substantial reduction in the effective length of the line and reduces its space requirements. If the modular extrusion line is then arranged with an even number of layers of the cooling system, then the technological component of the ascending conveyor and the descending conveyor are advantageously arranged in the same or adjacent module of the base structure of the line for the purpose of shortening of the production line. If, on the other hand, such modular extrusion line is arranged with an odd number of layers of the cooling system in the superstructure of the line, then the technological component of the ascending conveyor and the descending conveyor are advantageously arranged in non-contiguous modules of the base structure of the line in order to shorten the production line. The termination of the modular extrusion line is advantageously implemented such that the descending conveyor is followed by the blowing conveyor, the inspection conveyor, the second weight conveyor, the cross-cutter conveyor, the conveyor above the winders, the winders, and the scrap conveyor, which is included at the end of the production line.

The advantages of the construction of the modular extrusion line according to the invention are apparent from its effects by which it manifests itself externally. The effects consist in the fact that it is assembled into frames which serve as the supporting structure of the line, since the devices comprised therein, the technological components are installed in multiple levels or floors and also serve as transport frames which fit into standard shipping containers.

The modules are created by mounting these devices in frames, where several modules are joined together to create the extrusion line. The individual modules thus have a short preparation time for transport and handling, e.g. by crane, trolley, and at the same time they have the possibility of setting in each of the four lower corners in a plane or axis so that they can be joined together in high precision. Installation of modules into frames, e.g. 6 m long, allows the devices to be installed, activated and tested at the manufacturer's plant prior to actual shipment to customers, and after testing they do not have to be dismantled into smaller parts, but only the individual frames are disconnected from each other, while the components inside the frames remain fully assembled. The completed modules are subsequently transported to their final destination without the need to dismantle the devices already installed in them. This saves time and costs for packaging, transport, installation and commissioning. Overall, the delivery time of the device is shortened, as the installation and commissioning at the customer's site consists only of connecting of the modules, while minimising the necessary preparatory works.

### Overview of figures on the drawings

The construction of the modular extrusion line according to the invention will be further explained in the drawings, in which:
Fig. 1 shows the insertion of the modular extrusion line frame into international shipping containers.
Fig. 2 shows in basic outline the layout of the installed modular extrusion line.
Fig. 3 shows the adjustment of the technological component in the assembled module frame using the adjusting element for adjustment in one axis.
Fig. 4 shows the setup of adjacent modules of the base structure of the line by means of setting elements to form the base structure of the line and their anchoring to the floor by means of the common anchoring element in the horizontal plane.
Fig. 5 shows the setup of one marginal module of the base structure of the line by means of the setting elements to form the base structure of the line and its anchoring to the floor by means of the anchoring elements in the horizontal plane.
Fig. 6 shows the arrangement of the assembled frames of the superstructure modules of the line on the assembled frames of the modules of the base structure of the line by means of interconnecting elements for their precise connection.

### Examples of embodiment

It is understood that the individual embodiments of the invention are represented by way of illustration and not as limitations of the solutions.

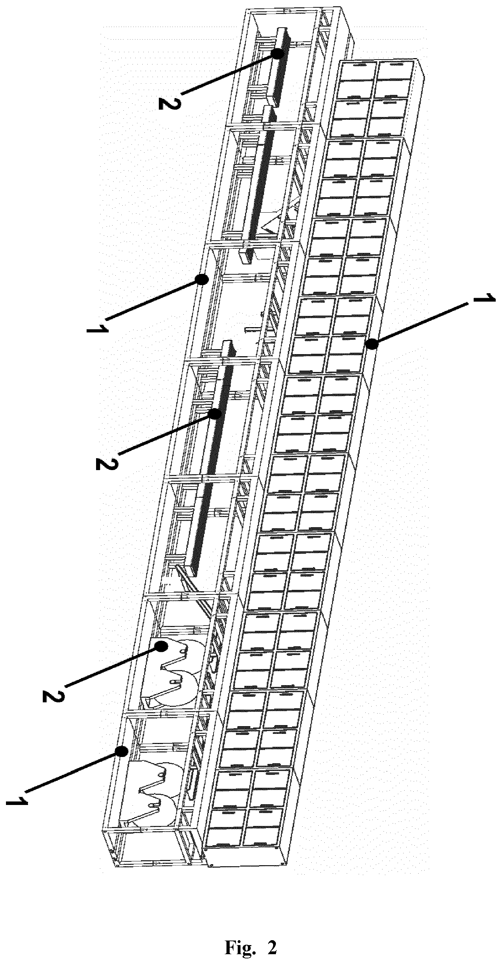

In this example of the specific embodiment, the illustrative construction of the modular extrusion line for production of semi-finished products of tyres from highly elastic compounds according to the invention is described. The extrusion line is assembled from 24 modules. These are 7 modules of the base structure of the line, 7 modules of the superstructure structure of the line of the first floor and 10 modules of the superstructure structure of the line of the second floor, as illustrated in Fig. 2.

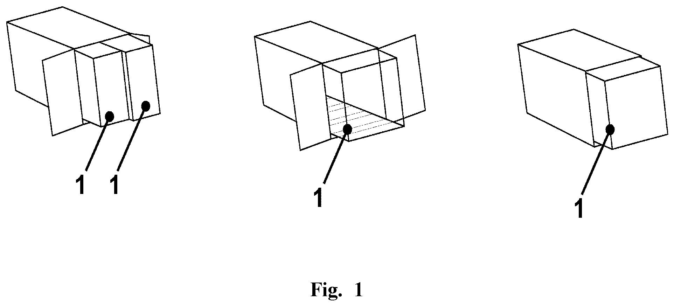

Each of these modules is formed by frame 1, wherein the technological components 2 are installed in the frames 1 of the individual modules. The frames 1 correspond dimensionally to the internal dimensions of the international shipping containers and therefore the frame 1 is also the transport support for storage in the international shipping containers as shown in Fig. 1

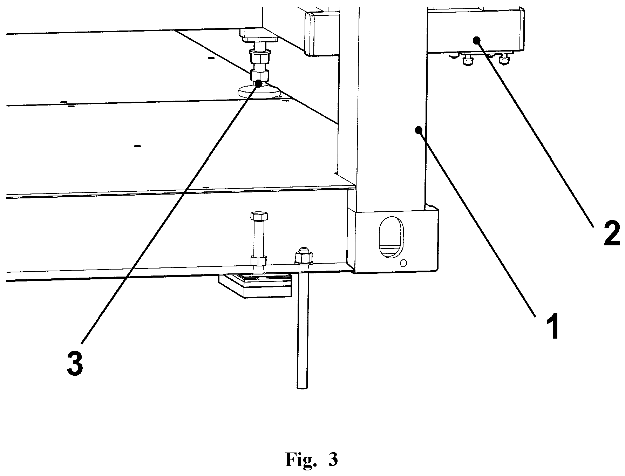

Where it is necessary, the technological components 2 in the frames 1 of the corresponding modules have adjustable elements 3 for adjustment in two axes and in the angular direction as shown in Fig. 3.

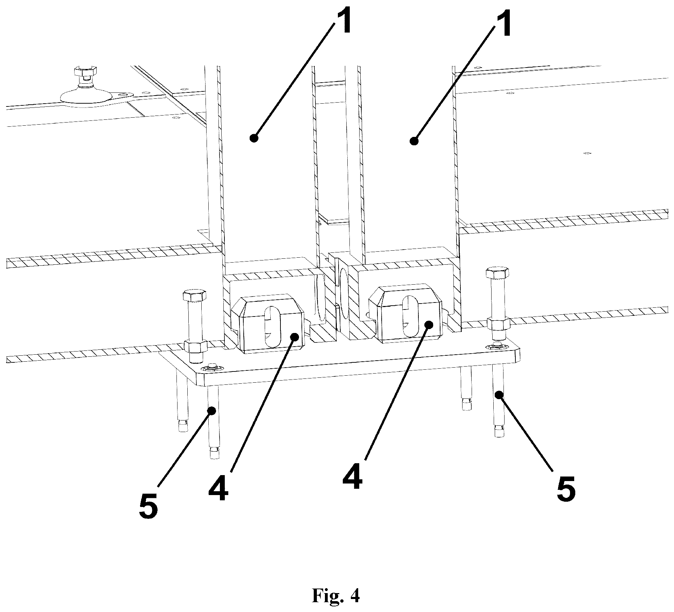

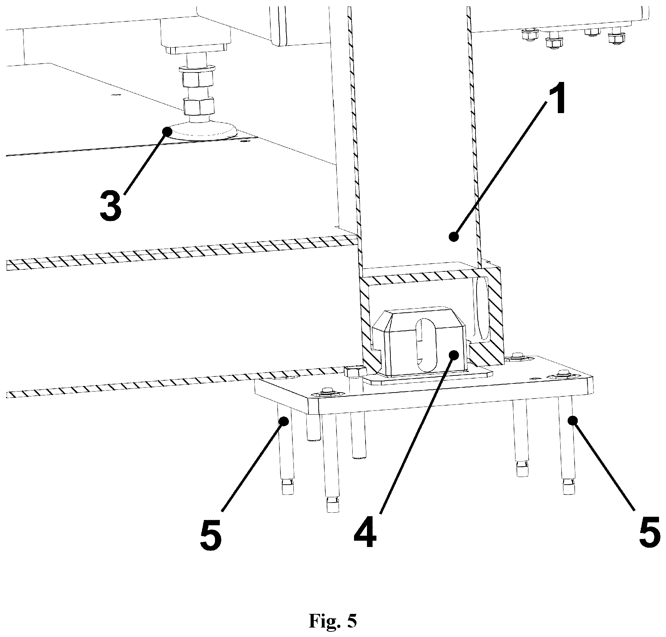

The frames 1 of the modules of the base structure of the line are precisely set with each other by means of the setting elements 4 to form the entire base structure of the line. The frames 1 of the modules of the base structure of the line are anchored to the floor by means of anchoring elements 5 in the horizontal plane as shown in Figs. 4 and 5.

The technological components 2 relating to the precipitation conveyor, the first weight conveyor, the ascending conveyor, the descending conveyor, the blowdown conveyor, the inspection conveyor, the second weight conveyor, the cross-cutting conveyor, the conveyor above winders, the winder conveyor, and the scraper conveyor are installed in the frames 1 of the base structure modules of the line.

The technological components 2 relating to power modules and power distribution networks are installed in the frames 1 of the modules of the superstructure of the first-floor line. The technological components 2 relating to cooling systems are installed in the frames of 1 of the modules of the superstructure of the second-floor line.

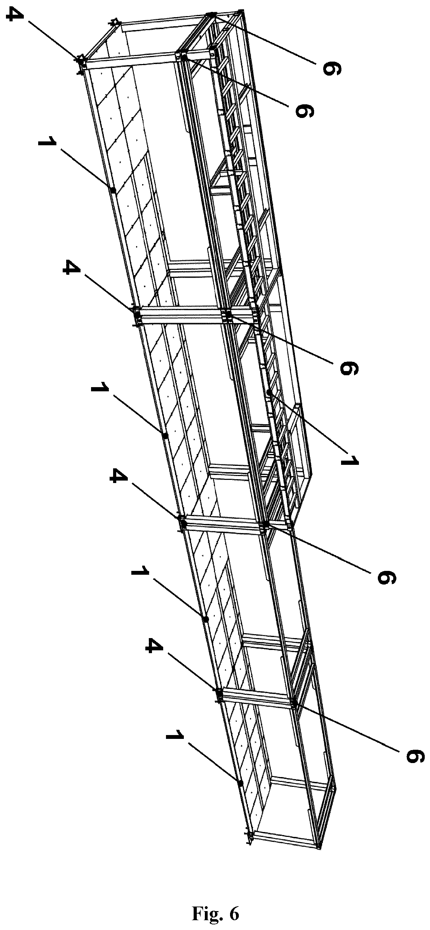

The frames 1 of the modules of the line superstructure of the first floor are interconnected with the frames 1 of the modules of the base structure of the line by means of interconnecting elements 6 for their precise interconnection. Also, the frames 1 of the modules of the line superstructure of the second floor are interconnected with each other with the frames 1 of the modules of the line superstructure of the second floor by means of the interconnecting elements 6 for their precise interconnection as shown in Fig. 6.

The modular extrusion line described in this example has an even number of layers of the cooling system, thus the technological components 2 of the ascending conveyor and the descending conveyor are arranged in adjacent modules of the base structure of the line.

This arrangement has the alternative solution where the modular extrusion line has an odd number of layers of the cooling system, thus the technological components 2 of the ascending conveyor and the descending conveyor are arranged in non-adjacent modules of the base structure of the line.

In both cases, the module of the base structure of the line is connected to the module of the superstructure of the line of the second floor through the ascending conveyor and the descending conveyor, which are led through the modules of the superstructure of the line of the first floor.

The modular extrusion line is terminated with such construction where the descending conveyor is followed by the blowing conveyor, the inspection conveyor, the second weight conveyor, the cross-cutting conveyor, the conveyor above the winders, the winders, and the scrap conveyor which is included at the end of the production line.

### Industrial applicability

The modular extrusion line according to the invention is useful in the production of semi-finished products of tyres from high-elastic compounds in the rubber industry.

### List of the reference numbers

- 1: frame
- 2: technological component
- 3: adjusting elements
- 4: setting elements
- 5: anchoring elements
- 6: interconnecting elements

## Claims

1. A modular extrusion line involved for production of semi-finished products of tyres from high-elastic compounds, **characterized in that**
- comprises a plurality of modules, wherein each module is formed by a frame (1) dimensionally corresponding to an internal dimensions of an internationally transportable containers, the frame (1) is also the transport support;
- at least one technological component (2) is installed in the frame (1) of at least one module;
- at least one technological component (2) in the frame (1) of at least one module comprises adjustable elements (3) for adjustment in at least one axis.

2. The modular extrusion line according to claim 1, **characterized in that** the technological component (2) installed in the frame (1) is at least one technological component (2) from a following list: a precipitating conveyor, a first weight conveyor, an ascending conveyor, a cooling system, a descending conveyor, a blowing conveyor, an inspection conveyor, a second weight conveyor, a cross-cutting conveyor, a conveyor above a winders, a scrap conveyor, and a winding conveyor.

3. The modular extrusion line according to any one of the preceding claims, **characterized in that** it comprises modules of a base structure of a line, the frames (1) of which are precisely set with each other by means of setting elements (4) and form a base structure of a line.

4. The modular extrusion line according to claim 3, **characterized in that** the frames (1) of the module of the base structure of the line are anchored to a floor by means of anchoring elements (5) in a horizontal plane.

5. The modular extrusion line according to claim 4, **characterized in that** the setting elements (4) of the frames (1) of mutually adjacent modules of the base structure of the line are anchored in the common anchoring element (5).

6. The modular extrusion line according to any one of claims 4 or 5, **characterized in that** it comprises at least one module of a superstructure of the line.

7. The modular extrusion line according to claim 6, **characterized in that** the frame (1) of each module of the superstructure of the line is interconnected to the frame (1) of at least one module of the base structure of the line by means of interconnecting elements (6) for precisely connecting them.

8. The modular extrusion line according to claim 7, **characterized in that** at least one module of the superstructure of the line has installed at least one technological component (2).

9. The modular extrusion line according to claim 8, **characterized in that** the technological component (2) installed in the frame (1) of at least one module of the superstructure of the line is a cooling system.

10. The modular extrusion line according to any one of claims 5 to 9, **characterized in that** at least one frame (1) of the module of the superstructure of the line has installed the technological component (2) of the ascending conveyor and at least one frame (1) of the module of the superstructure of the line has installed the technological component (2) of the descending conveyor.

11. The modular extrusion line according to any one of claims 5 to 10, **characterized in that** the module of the base structure of the line is connected to the module of the superstructure of the line through the technological component (2) of the ascending conveyor or the descending conveyor.

12. The modular extrusion line according to any one of claims 2 to 11, **characterized in that** the technological component (2) of the ascending conveyor and the descending conveyor with an even number of layers of the cooling system are arranged in the same or adjacent module of the base structure of the line.

13. The modular extrusion line according to any one of the preceding claims 2 to 11, **characterized in that** the technological component (2) of the ascending conveyor and the descending conveyor with an odd number of layers of the cooling system are arranged in non-adjacent modules of the base structure of the line.

14. The modular extrusion line according to any one of the preceding claims 2 to 11, **characterized in that** the technological component (2) of the descending conveyor is followed by the technological components of the blowing conveyor, the inspection conveyor, the second weight conveyor, the cross-cutting conveyor, the conveyor above the winders and the scrap conveyor, which is located at the end of the production line.
